(19) Europäisches Patentamt
European Patent Office
Office européen des brevets

(11) **EP 3 667 392 A1**

(12) **EUROPEAN PATENT APPLICATION**
published in accordance with Art. 153(4) EPC

(43) Date of publication:
**17.06.2020 Bulletin 2020/25**

(21) Application number: **17921284.0**

(22) Date of filing: **10.08.2017**

(51) Int Cl.:
**G02B 25/00** (2006.01)    **F41G 1/30** (2006.01)
**G02B 17/08** (2006.01)    **G02B 23/02** (2006.01)
**G03B 13/06** (2006.01)    **G03B 17/56** (2006.01)

(86) International application number:
**PCT/JP2017/029181**

(87) International publication number:
**WO 2019/030912 (14.02.2019 Gazette 2019/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **TOKYO MARUI Co., Ltd.**
**Tokyo 120-0005 (JP)**

(72) Inventor: **IWASAWA, Iwao**
**Tokyo 1200005 (JP)**

(74) Representative: **Becker, Eberhard**
**Becker & Kurig Partnerschaft**
**Patentanwälte PartmbB**
**Bavariastrasse 7**
**80336 München (DE)**

(54) **DOT SIGHT**

(57)    Task
   Provided are an objective lens that is made of synthetic resin, can easily take aim even though a target object moves, and is available in a dot sight, and a dot sight using the objective lens.
   Solving Means
   An objective lens includes a lens made of synthetic resin through which light is transmitted, and a reflective surface that is disposed on an observer side or an opposite side to the observer side in the lens made of synthetic resin, in which the reflective surface includes a curved surface represented by the following Equation 1 and (1) in order to spuriously express a target spot to an observer by reflecting light applied from a light source:

$$z = \frac{ch^2}{1+\sqrt{1-(1+k)c^2h^2}}$$  (Equation 1)

(1) $-0.033 \le c \le -0.008$ and $k = -1$ where c is a curvature and k is a conical coefficient.

EP 3 667 392 A1

FIG. 1

**Description**

Technical Field

The present invention relates to a dot sight as an optical sighting device mounted on a firearm such as a pistol or a rifle, or a simulated gun thereof, and an imaging apparatus such as a camera.

Background Art

A dot sight is a so-called sighting device, and takes aim by reflecting a light source at an objective lens and aligning a light spot with a target object viewed through the objective lens, the light spot being formed by reflecting light from the light source at the objective lens. The dot sight has a characteristic of taking aim when a light spot is aligned with a target object even though a user looks through the lens at any angle, and thus rapidly takes aim even when the target object moves.

A dot sight is disclosed in Japanese Patent No. 4585532. An external housing of the dot sight has both end surfaces made of transparent glass and is configured to be sealed, but has a problem of being damaged, for example, when hit by a so-called BB used in an electric gun. The external housing may be damaged by impact. In order to solve the problems, an external housing is made of synthetic resin instead of glass, and an objective lens is also preferably made of synthetic resin, but this has been already disclosed.

For example, Japanese Patent Unexamined Publication No. 2016-143000 has proposed that a lens which is one of optical elements is made of a transparent resin material in the disclosure of the specification thereof. In a case where an objective lens is made of synthetic resin as mentioned above, it is possible to create a lens that hardly breaks even through the lens is hit by a BB and can also withstand impact.

The patent literature discloses that the objective lens that is an optical element has a reflective surface 14a formed in a parabolic shape or a recess shape similar to a paraboloid. Therefore, in a case where an objective lens that is one of optical elements is manufactured by using synthetic resin as a material, and a dot sight is created by using the objective lens, when a visual line of a user looking through the objective lens is moved, it is clear that a reflected light source is moved.

In other words, as described above, the dot sight has the characteristic that, after aim is temporarily taken by matching the reflected light source with the target object, even though a visual line is away from the reflected light source, the aim is still taken as long as a positional relationship between the dot sight and the target object is not changed.

However, in the dot sight using the objective lens made of synthetic resin, when a visual line is away from the reflected light source, the target object is deviated relative to the reflected light source, and thus there is a problem in that aim cannot be taken at the target object.

Citation List

Patent Literature

[PTL 1] Japanese Patent No. 4585532
[PTL 2] Japanese Patent Unexamined Publication No. 2016-143000

Summary of Invention

Technical Problem

The present invention has been made focusing on the problems, and an object thereof is to provide an objective lens that is made of synthetic resin, can easily take aim even though a visual line is away from a target object, and is available in a dot sight, and a dot sight using the objective lens.

Solution to Problem

The present inventor has created an objective lens having a reflective surface in a dot sight by using synthetic resin, and, as described above, the objective lens hardly breaks even though the objective lens is hit by a BB, but has a problem in that aim is deviated when a visual line is moved. As a result of examination of this phenomenon, it has been found that deviation of aim is caused by a spherical aberration.

In a case where Equation 1 representing an aspherical shape of an optical lens is used, it is necessary to satisfy a specific condition in order to correct a spherical aberration in the optical lens having the aspherical shape. In other words, the present inventor has invented an objective lens having a reflective surface made of synthetic resin by using the general Equation 1 representing an aspherical shape under the condition of $-0.033 \leq c \leq -0.008$ and $k = -1$ where c is a curvature and k is a conical coefficient, and a dot sight using the objective lens.

Therefore, an objective lens of a first aspect includes a lens made of synthetic resin through which light is transmitted; and a reflective surface that is disposed on an observer side or an opposite side to the observer side in the lens made of synthetic resin, in which the reflective surface includes a curved surface represented by the following Equation 1 and (1) in order to spuriously express a target spot to an observer by reflecting light applied from a light source.

$$z = \frac{ch^2}{1+\sqrt{1-(1+k)c^2h^2}}$$ (Equation 1)

(1) $-0.033 \leq c \leq -0.008$ and $k = -1$ where c is a curvature and k is a conical coefficient.

A dot sight of a second aspect includes a light source that applies light; and the objective lens of the first aspect.

In the dot sight of a third aspect, in the second aspect, the reflective surface is a half mirror that reflects part of received light.

In the dot sight of a fourth aspect, in the second aspect or the third aspect, the objective lens is an equal magnification lens. In other words, this indicates that an optical magnification is equal when a distant place is observed through the objective lens compared with a case where observation is performed without using the objective lens.

Advantageous Effects of Invention

According to the present invention, it is possible to provide an objective lens that is made of synthetic resin and can easily take aim even though a target object moves, and a dot sight using the objective lens.

Brief Description of Drawings

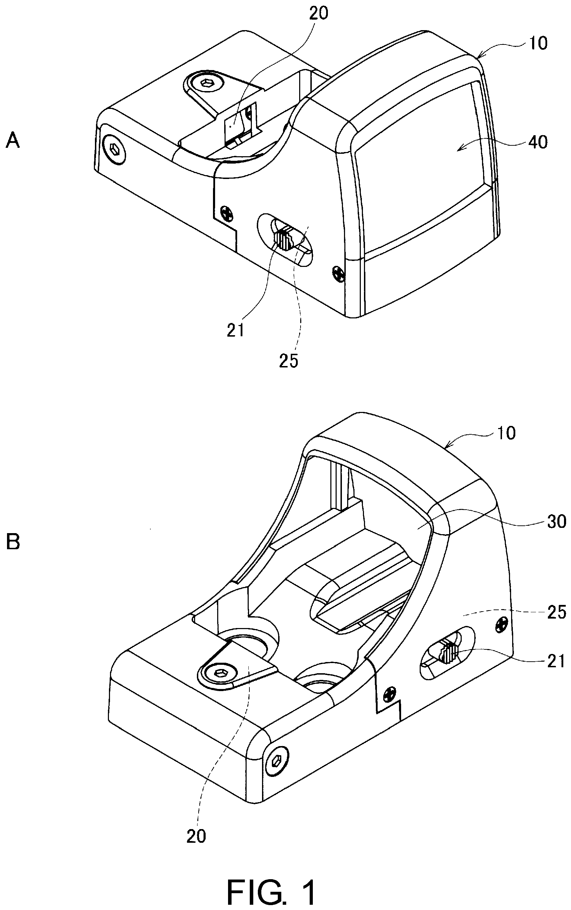

A of Fig. 1 is a front perspective view illustrating a dot sight.
B of Fig. 1 is a rear perspective view of the dot sight.
Fig. 2 is a conceptual diagram illustrating a curve for specifying a shape of a reflective surface.
Fig. 3 is a conceptual side view illustrating the dot sight having a curved surface.

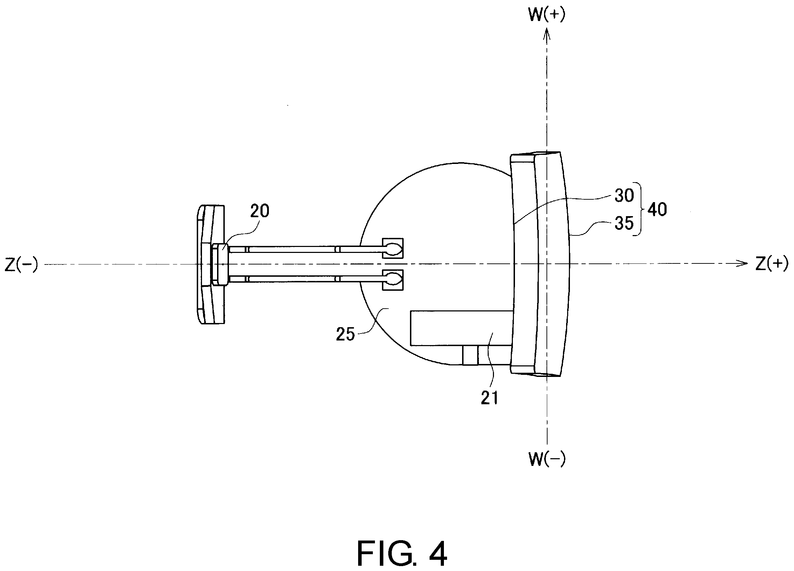

Fig. 4 is a conceptual plan view illustrating the dot sight having the curved surface.
A of Fig. 5 is a front perspective view illustrating a second dot sight.
B of Fig. 5 is a rear perspective view illustrating the second dot sight.
Fig. 6 is a conceptual side view illustrating the second dot sight having a curved surface.

Description of Embodiments

A description will be made of a dot sight 10 in the present embodiment. The dot sight 10 is a sighting device that can take aim by aligning an aim mark (reticle) applied from a light source 20 and projected onto a reflective surface 30 with a target object f, and is mounted on a gun or the like to be used to take rapid aim. The light source 20 is lighted when power is supplied from a battery 25 by turning on a switch 21. Therefore, the light source 20 is preferably a light emitting diode (LED), and light from the light source 20 is reflected by the reflective surface 30. In this case, the dot sight may be referred to as a red dot sight since the light source 20 emitting so-called red light is used.

An objective lens 40 made of synthetic resin has the reflective surface 30 and a transmissive surface 35 through which light is transmitted, and the surfaces are integrally disposed. Here, the reflective surface 30 has a curved surface y represented by Equation 1 which will be described later in order to spuriously express a target spot to an observer by reflecting light applied from the light source. An equal magnification may be obtained without changing a magnification when an observer P views the target object f by changing a shape of the transmissive surface 35 to any shape. Here, the equal magnification indicates that an optical magnification when a distant place is observed through the objective lens is the same as that when the distant place is observed without using the objective lens. In the above-described way, there is no discomfort even though the whole is viewed with one eye of the observer P, and the dot sight is looked through with the other eye, and aim can be easily taken at the target object f. Magnification or demagnification may occur. In other words, as will be described later, as long as the reflective surface 30 has a shape represented by predetermined Equation 1, the transmissive surface 35 formed integrally therewith may have any shape.

A shape of the reflective surface 30 is an aspherical shape, and may be represented by the following Equation 1. As will be described later, in a case where the objective lens 40 having the reflective surface 30 and the transmissive surface 35 is made of synthetic resin, as a result of long examination of aim deviation, it has been found that the deviation is removed when the occurrence of a spherical aberration is corrected. Consequently, in the following Equation 1 for correcting the spherical aberration, a predetermined condition has been found, that is, a value of the curvature c is preferably in a range of -0.033 ≤ the curvature c ≤ -0.008 and the conical coefficient k is -1 as a result of research and development, and the reflective surface 30 having a shape using the specific condition can be created.

$$z = \frac{ch^2}{1+\sqrt{1-(1+k)c^2h^2}}$$
(Equation 1)

Here, c is the above-described curvature, and a distance from the light source 20 to f1 is preferably 15 millimeters to 60 millimeters by taking into consideration a size of the dot sight 10. As a result of research and development, it has been found that a value of the curvature c is preferably in a range of -0.033 ≤ the curvature c ≤ -0.008, and a value of c in a case where a distance from the light source 20 to f1 is 20 millimeters is -0.025. The conical coefficient k = -1 is assigned.

Here, the reason why the conical coefficient k is -1 is that a paraboloid is obtained at the conical coefficient of -1, and the spherical aberration is completely corrected by using the paraboloid. As described above, as an example, when -0.025 as a value of c and the conical coefficient k = -1 are assigned to above Equation 1, the following is obtained. $z = -0.025h^2/2$

This is an equation representing a shape of the aspherical reflective surface 30 in the present embodiment.

In other words, 0 and numerical values from 1.00 to 10.00 are assigned to h in the above equation, and a value of each z is as shown in Table 1. For convenience, a third decimal place is rounded off. Here, a value indicated by Sag is a value of z when a vertex of an aspherical surface represented by an aspherical polynomial is set to the origin, an optical axis is set to a z axis as a transverse axis, h indicating a distance from the optical axis is set to a longitudinal axis, and a numerical value is assigned to h on a zh plane.

[Table 1]

| Sag amount of aspherical surface | |
| --- | --- |
| h | z |
| 0 | 0 |
| 1.00 | -0.01 |
| 2.00 | -0.05 |
| 3.00 | -0.11 |
| 4.00 | -0.20 |
| 5.00 | -0.31 |
| 6.00 | -0.45 |
| 7.00 | -0.61 |
| 8.00 | -0.80 |
| 9.00 | -1.01 |
| 10.00 | -1.25 |

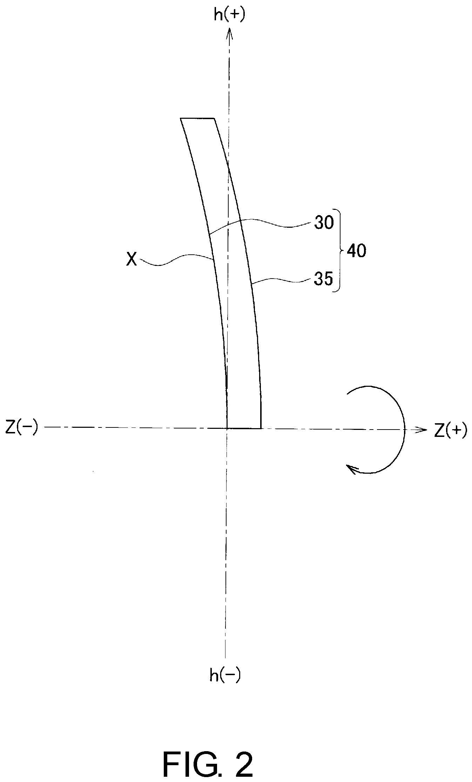

As mentioned above, a value of z obtained by assigning h to Table 1 is plotted on the zh plane such that a curve x is obtained, and Fig. 2 illustrates the curve x. The curved surface y obtained by rotating the curve x about the z axis forms a shape of the reflective surface 30. Therefore, the curved surface y is represented by Equation 1, and the reflective surface 30 is formed of the curved surface y. Therefore, the reflective surface 30 formed of the curved surface y is disposed in the objective lens 40, and thus a spherical aberration of the dot sight 10 having the objective lens is corrected.

The reflective surface 30 literally reflects light from the light source 20, but may be a so-called half mirror (transflective film) that does not totally reflect the light but reflects part of received light.

Preferably, the reflective surface 30 is not necessarily provided with a transflective film. In a case where the transmissive surface 35 is made of transparent synthetic resin, for example, polycarbonate, the reflectance thereof is about 15 percent, and thus the reflective surface 30 is disposed on an observer side or an opposite side thereto in the transmissive surface 35 such that light from the light source 20 can be reflected. In this case, the transmittance is 85 percent, and thus the target object f is clearly viewed through the reflective surface 30. As described above, a distance from the light source 20 to f1 in a case where the reflective surface 30 is disposed on the observer side in the transmissive surface 35 is preferably 15 millimeters to 60 millimeters by taking into consideration a size of the dot sight 10.

In a case where a reflective film is provided on the reflective surface 30, for example, when the reflectance is set to 20 percent, the transmittance is 80 percent, and thus light from the light source 20 can be more reliably reflected. The reflectance may be set to any reflectance.

The reflective surface 30 is preferably formed integrally with the objective lens 40. The reflective surface 40 is preferably disposed on the front side when viewed from the observer P.

The dot sight 10 has a well-known attachment portion (not illustrated), and may be attached to a gun.

The dot sight 10 having the configuration is attached to, for example, a gun (not illustrated). A light spot l from the light source 20 that is lighted when power is supplied from the battery 25 by turning on the switch 21 is reflected at the reflective surface 30 having the configuration, and the light spot horizontally enters the eye of the observer P. In this case, it appears to the observer P that the light spot l is located substantially at the center of the reflective surface 30. Needless to say, the light spot l from the light source 20 is configured to be applied to the center of the reflective surface 30 in advance.

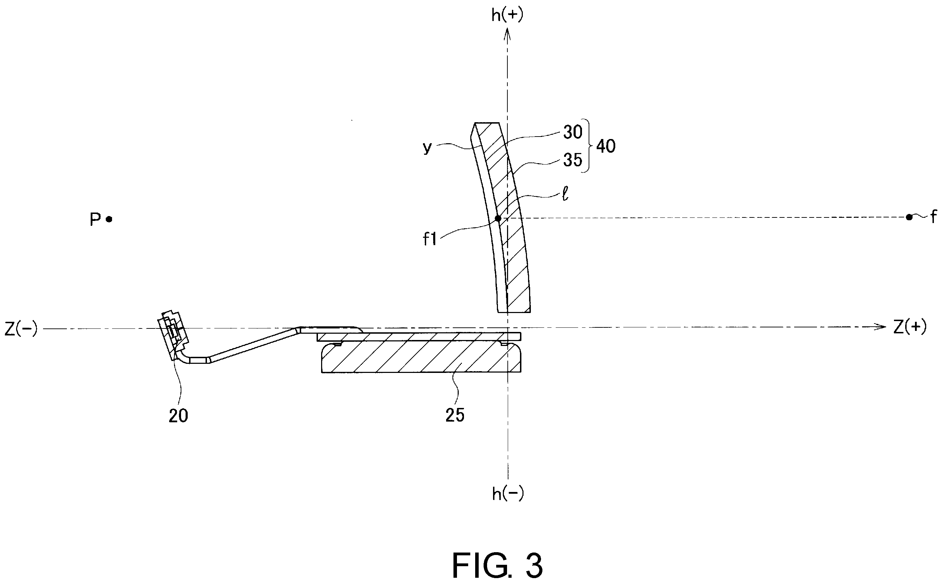

The observer P looks at the target object f, and moves the dot sight 10 such that the light spot l of the light source 20 and the target object f projected onto the reflective surface 30 match each other. In a case where the light spot l matches an image f1 of the target object f projected onto the reflective surface 30 as mentioned above, an optical axis horizontally reflected matches an optical axis entering the eye of the observer P from the target object f through the objective lens 40 (refer to Fig. 3).

In this case, since the dot sight 10 is attached to the gun such that a direction of a muzzle matches the light spot in advance, when the observer P pulls a trigger, a bullet hits the target object f. As mentioned above, it is possible to simulate a situation in which red light is horizontally incident from the target object f located at a considerably distant place, and thus the observer P can accurately take aim.

As described above, since a predetermined shape of the reflective surface 30 is the above-described shape, a spherical aberration is corrected, and thus aim deviation is removed.

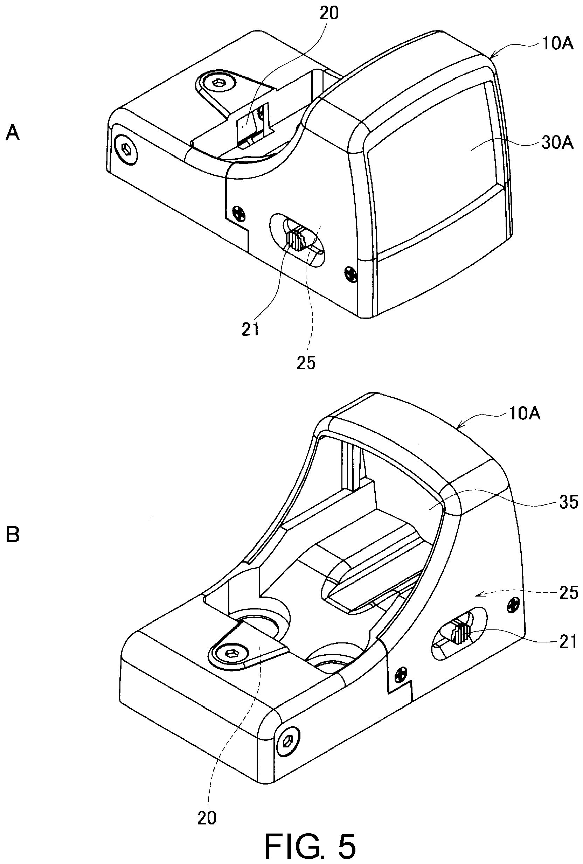

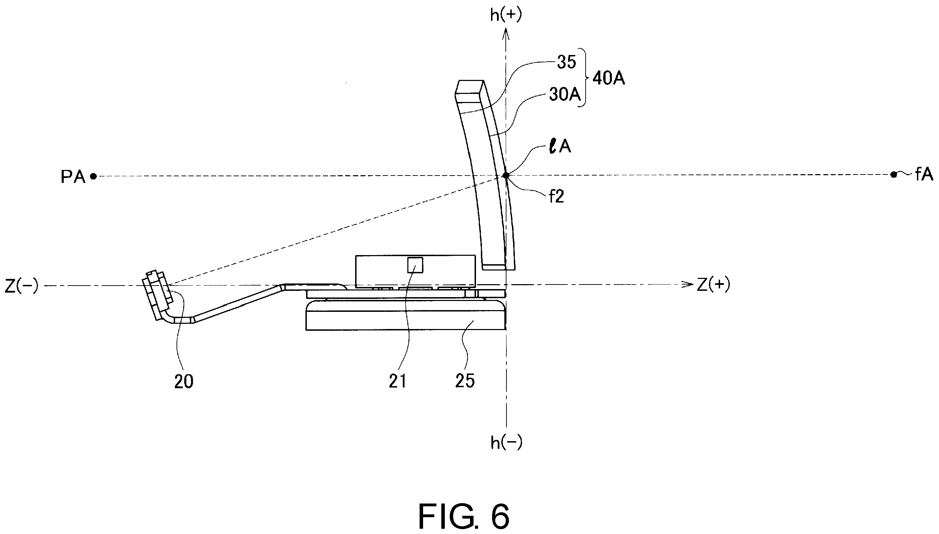

As another embodiment, a shape of a second objective lens 40A on a target object fA side in a second dot sight 10A may be formed by a second reflective surface 30A. This is only a difference from the dot sight 10, and the remaining configurations are the same, and are thus given the same reference numerals, and description thereof will be omitted (refer to A and B of Fig. 5). In Fig. 6, the second reflective surface 30A may be disposed on the target object fA side. Here, an observer PA looks at the target object fA, and moves the second dot sight 10A such that a light spot lA of the light source 20 and the target object fA projected onto the second reflective surface 30A match each other. In a case where the light spot lA matches an image f2 of the target object fA projected onto the second reflective surface 30A as mentioned above, an optical axis horizontally reflected matches an optical axis entering the eye of the observer PA from the target object fA through the second objective lens 40A. As described above, a distance from the light source 20 to f2 in a case where the second reflective surface 30A is disposed on the opposite side to the observer side in the second objective lens 40A is preferably 15 millimeters to 60 millimeters by taking into consideration a size of the dot sight 10.

In this case, since the second dot sight 10A is attached to the gun such that a direction of a muzzle matches the light spot in advance, when the observer PA pulls a trigger, a bullet hits the target object fA. As mentioned above, it is possible to simulate a situation in which red light is horizontally incident from the target object fA located at a considerably distant place, and thus the observer PA can accurately take aim.

Reference Signs List

10    DOT SIGHT
10A   SECOND DOT SIGHT
20    LIGHT SOURCE
21    SWITCH

25      BATTERY
30      REFLECTIVE SURFACE
30A    SECOND REFLECTIVE SURFACE
35      TRANSMISSIVE SURFACE
40      OBJECTIVE LENS
40A    SECOND OBJECTIVE LENS


**Claims**

1.  An objective lens comprising:

    a lens made of synthetic resin through which light is transmitted; and
    a reflective surface that is disposed on an observer side or an opposite side to the observer side in the lens
    made of synthetic resin,
    wherein the reflective surface includes a curved surface represented by the following Equation 1 and (1) in
    order to spuriously express a target spot to an observer by reflecting light applied from a light source:

    $$z = \frac{ch^2}{1+\sqrt{1-(1+k)c^2h^2}} \qquad \text{(Equation 1)}$$

    (1) $-0.033 \leq c \leq -0.008$ and $k = -1$ where c is a curvature and k is a conical coefficient.

2.  A dot sight comprising:

    a light source that applies light; and
    the objective lens according to claim 1.

3.  The dot sight according to claim 2,
    wherein the reflective surface is a half mirror that reflects part of received light.

4.  The dot sight according to claim 2 or 3,
    wherein the objective lens is an equal magnification lens.

A

B

FIG. 1

h(+)

X

30
40
35

Z(−) — — — — — — — — — — — — — — Z(+)

h(−)

## FIG. 2

FIG. 3

EP 3 667 392 A1

FIG. 4

A

20

10A

30A

21

25

B

10A

35

25

21

20

## FIG. 5

FIG. 6

**INTERNATIONAL SEARCH REPORT**

| International application No. |
|---|
| PCT/JP2017/029181 |

A. CLASSIFICATION OF SUBJECT MATTER

*G02B25/00*(2006.01)i, *F41G1/30*(2006.01)i, *G02B17/08*(2006.01)i, *G02B23/02* (2006.01)i, *G03B13/06*(2006.01)i, *G03B17/56*(2006.01)i

According to International Patent Classification (IPC) or to both national classification and IPC

B. FIELDS SEARCHED

Minimum documentation searched (classification system followed by classification symbols)
G02B25/00, F41G1/30, G02B17/08, G02B23/02, G03B13/06, G03B17/56

Documentation searched other than minimum documentation to the extent that such documents are included in the fields searched

Jitsuyo Shinan Koho     1922-1996    Jitsuyo Shinan Toroku Koho   1996-2017
Kokai Jitsuyo Shinan Koho  1971-2017    Toroku Jitsuyo Shinan Koho   1994-2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2001-500990 A (Firearms Research Ltd.), 23 January 2001 (23.01.2001), page 8, line 26 to page 10, line 23; page 12, line 26 to page 20, line 2; fig. 1 & WO 1998/013717 A2 page 4, line 23 to page 7, line 7; page 10, line 1 to page 18, line 33; fig. 1 & US 6327806 B1      & EP 1028343 A1 | 1-4 |
| X | JP 7-056088 A (Aimpoint AB), 03 March 1995 (03.03.1995), paragraphs [0012] to [0038]; fig. 1 to 2 & US 5440387 A column 2, line 24 to column 5, line 43; fig. 1 to 2 & GB 2277606 A | 1-4 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 31 October 2017 (31.10.17) | 07 November 2017 (07.11.17) |

| Name and mailing address of the ISA/ Japan Patent Office 3-4-3,Kasumigaseki,Chiyoda-ku, Tokyo 100-8915,Japan | Authorized officer |
|---|---|
| | Telephone No. |

Form PCT/ISA/210 (second sheet) (January 2015)

**INTERNATIONAL SEARCH REPORT**

International application No.

PCT/JP2017/029181

C (Continuation). DOCUMENTS CONSIDERED TO BE RELEVANT

| Category* | Citation of document, with indication, where appropriate, of the relevant passages | Relevant to claim No. |
|---|---|---|
| X | US 5189555 A (Aimpoint AB),<br>23 February 1993 (23.02.1993),<br>fig. 1; column 3, line 22 to column 4, line 52<br>& SE 8901657 A | 1-4 |
| X | JP 2016-143000 A (Olympus Corp.),<br>08 August 2016 (08.08.2016),<br>paragraph [0068]; fig. 2, 7<br>& US 2016/0223806 A1<br>paragraph [0089]; fig. 2, 7<br>& CN 105842838 A | 1-4 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4585532 B

- JP 2016143000 A